# EUROPÄISCHE PATENTSCHRIFT

(11) **EP 4 248 613 B1**
(45) Veröffentlichungstag und Bekanntmachung des Hinweises auf die Patenterteilung: **26.08.2026**
(21) Anmeldenummer: 21820176.2
(22) Anmeldetag: 24.11.2021
(51) Int. Cl.: H04L 9/40, H04W 12/80, H04L 67/61, H04L 67/12, H04L 67/63

(54) **NETZWERKMODUL, ELEKTRONISCHES SYSTEM UND KOMMUNIKATIONSNETZWERK**
NETWORK MODULE, ELECTRONIC SYSTEM AND COMMUNICATION NETWORK
MODULE DE RÉSEAU, SYSTÈME ÉLECTRONIQUE ET RÉSEAU DE COMMUNICATION

(30) Priorität: 24.11.2020 DE 102020131072
(43) Veröffentlichungstag der Anmeldung: 27.09.2023
(73) Patentinhaber: Rheinmetall Electronics GmbH, 28309 Bremen (DE)
(72) Erfinder: GINZLER, Tobias, 28865 Lilienthal (DE); KOCHANNECK, Sebastian, 28329 Bremen (DE); ROSENTHAL, Philipp, 28203 Bremen (DE)
(74) Vertreter: HKW Intellectual Property PartG mbB
(86) Internationale Anmeldenummer: PCT/EP2021/082881
(87) Internationale Veröffentlichungsnummer: WO 2022/112362

(56) Entgegenhaltungen:
- US-A1- 2003 158 963
- US-A1- 2007 258 486
- JANSEN NORMAN ET AL: "Middleware for coordinating a tactical router with SOA services", 2015 INTERNATIONAL CONFERENCE ON MILITARY COMMUNICATIONS AND INFORMATION SYSTEMS (ICMCIS), MILITARY UNIVERSITY OF TECHNOLOGY, 18 May 2015 (2015-05-18), pages 1 - 7, XP033176285, [retrieved on 20150714], DOI: 10.1109/ICMCIS.2015.7158699
- LOPES ROBERTO RIGOLIN F ET AL: "A queuing mechanism for delivering QoS-constrained web services in tactical networks", 2018 INTERNATIONAL CONFERENCE ON MILITARY COMMUNICATIONS AND INFORMATION SYSTEMS (ICMCIS), IEEE, 22 May 2018 (2018-05-22), pages 1 - 8, XP033367860, DOI: 10.1109/ICMCIS.2018.8398695

## Beschreibung

Die vorliegende Erfindung betrifft ein Netzwerkmodul eines elektronischen Systems einer Einsatzkraft für ein eine Mehrzahl von elektronischen Systemen koppelndes Kommunikationsnetzwerk. Des Weiteren betrifft die vorliegende Erfindung ein elektronisches System einer Einsatzkraft mit einem solchen Netzwerkmodul sowie ein Kommunikationsnetzwerk, welches eine Mehrzahl von elektronischen Systemen koppelt und wobei das jeweilige elektronische System ein solches Netzwerkmodul umfasst.

Beispielsweise militärische Kommunikationsnetzwerke können eine Vielzahl unterschiedlicher elektronischer Systeme, wie Fahrzeugsysteme und Soldatensysteme, unter Verwendung unterschiedlicher Kommunikationsmodule, wie taktischer Funkgeräte und LTE-Module, koppeln.

Allerdings kann es nachteiligerweise im Betrieb eines solchen militärischen Kommunikationsnetzwerkes zu einer Überlast einzelner Kommunikationsmodule, beispielsweise von taktischen Funkgeräten, kommen. Hierdurch kann nachteiligerweise auch die Kommunikation über das Kommunikationsnetzwerk zusammenbrechen, was insbesondere im Felde besonders nachteilig ist.

Kommunikationsnetzwerke sind beispielsweise aus den Patenten DE 10 2015 107 071 B3, EP 3 192 226 B1 und US 10 681 057 B2 der Anmelderin bekannt.

Das Dokument US 2003/158963 A1 offenbart eine intelligente Kommunikationsfunktion, die veraltete militärische taktische Datenverbindungssysteme verbessert, indem sie eine Schnittstelle zwischen unterschiedlichen zivilen und militärischen Kommunikationssystemen an Bord von Militärflugzeugen, Bodenfahrzeugen und bodengestützten Kommunikationsinfrastrukturen schafft. Diese Fähigkeit führt verschiedene Informationsverwaltungsaufgaben aus, um eine Schnittstelle zu Avioniksystemen, Computersystemen von Bodenfahrzeugen und Computersystemen der bodengestützten Infrastruktur herzustellen. Das Dokument umfasst ferner Lerntechniken zur Verbesserung der Gesamteffizienz integrierter militärischer Missionen, Operationen und Wartung in Bereichen wie der intelligenten Konsolidierung von Datenverbindungsinformationen, der intelligenten Nachrichtenverteilung und der adaptiven Nachrichtenumleitung als Reaktion auf Kommunikationsnetzwerkausfälle.

Ferner offenbart die US 2007/258486 A1 Systeme und Verfahren zum Einreihen von Transportprotokollbefehlen mit Daten in einer Netzwerkumgebung mit geringer Bandbreite. Das Verfahren kann das Empfangen von Daten zur Übertragung über eine Netzwerkverbindung, das Einreihen der Daten, das Einreihen eines mit der Netzwerkverbindung in Zusammenhang stehenden Transportprotokollbefehls, das Übertragen der Daten über die Netzwerkverbindung und das Übertragen des Transportprotokollbefehls nach der Übertragung der Daten aufweisen. In bestimmten Beispielen werden die Daten und der Transportprotokollbefehl zumindest teilweise basierend auf der Manipulation einer Transportprotokollschicht eines Kommunikationsnetzwerks, beispielsweise eines taktischen Datennetzwerks, in die Warteschlange eingereiht. In bestimmten weiteren Beispielen werden die Daten auf der Grundlage mindestens einer Regel priorisiert, beispielsweise einer inhaltsbasierten Regel und/oder einer protokollbasierten Regel. In bestimmten weiteren Beispielen umfasst der Transportprotokollbefehl beispielsweise einen Befehl zum Schließen der Verbindung.

Überdies beschreibt der Artikel "LOPES ROBERTO RIGOLIN F ET AL: "A queuing mechanism for delivering QoS-constrained web services in tactical networks", 2018 INTERNATIONAL CONFERENCE ON MILITARY COMMUNICATIONS AND INFORMATION SYSTEMS (ICMCIS), IEEE, 22. Mai 2018 (2018-05-22), Seiten 1-8, XP033367860, DOI: 10.1109/ICMCIS.2018.8398695" einen hierarchischen Warteschlangen-Mechanismus zur Überwachung und Steuerung von Funkpuffern bei der Bereitstellung von Webdiensten in taktischen Netzen.

Aus N. Jansen et al. "Middleware for Coordinating a Tactical Router with SOA Services" , 2015 INTERNATIONAL CONFERENCE ON MILITARY COMMUNICATIONS AND INFORMATION SYSTEMS (ICMCIS), 18. Mai 2015, Seiten 1-7, XP033176285, DOI: 10.1109/ICMCIS.2015.7158699 ist ein Architekturkonzept für die Anpassung einer Service-Oriented-Architecture-(SOA)-Technologie bekannt, wobei ein speziell auf den taktischen Bereich zugeschnittener Enterprise Service Bus (ein "taktischer ESB") als technische Infrastruktur für die SOA verwendet wird.

Vor diesem Hintergrund besteht eine Aufgabe der vorliegenden Erfindung darin, die Kommunikation zwischen elektronischen Systemen eines Kommunikationsnetzwerks zu verbessern.

Gemäß einem ersten Aspekt wird ein Netzwerkmodul eines elektronischen Systems einer Einsatzkraft für ein eine Mehrzahl N von elektronischen Systemen koppelndes Kommunikationsnetzwerk vorgeschlagen, mit N ≥ 2. Das Kommunikationsnetzwerk ist insbesondere ein militärisches Kommunikationsnetzwerk, bevorzugt ein IP-Netzwerk (IP; Internet-Protokoll). Dabei weist das Netzwerkmodul auf:
eine Mehrzahl von Schnittstellen zum Koppeln einer Mehrzahl von Applikationen, wobei die jeweilige Applikation dazu eingerichtet ist, über das Kommunikationsnetzwerk zu übertragende paketierte Daten bereitzustellen,
eine Schnittstelleneinheit zum Koppeln eines Routingmoduls, welches zum Koppeln einer Mehrzahl von Kommunikationsmodulen eingerichtet ist, wobei das jeweilige Kommunikationsmodul zum Austauschen von paketierten Daten mit zumindest einem Kommunikationsmodul eines der N-1 weiteren elektronischen Systeme eingerichtet ist, und
eine zwischen den Schnittstellen und der Schnittstelleneinheit koppelbare Einstelleinheit. Die Einstelleinheit umfasst:
   eine Ermittlungseinheit zum Ermitteln eines aktuellen Netzwerkstatus des Kommunikationsnetzwerks in Abhängigkeit von von einer Mehrzahl M der weiteren elektronischen Systeme über das Routingmodul empfangenen Daten, mit 2 ≤ M ≤ N-1,
   eine Entscheidungseinheit zum Bereitstellen einer Entscheidung zur Einstellung eines Datenflusses von von den gekoppelten Applikationen bereitgestellten paketierten Daten an das Routingmodul zumindest in Abhängigkeit von dem ermittelten aktuellen Netzwerkstatus, und
   eine zwischen den Schnittstellen und der Schnittstelleneinheit verbindbare Netzwerkschnittstelleneinheit, welche dazu eingerichtet ist, den Datenfluss der von den gekoppelten Applikationen bereitgestellten paketierten Daten gemäß der bereitgestellten Entscheidung einzustellen.

Demnach ermittelt die Entscheidungseinheit eine Entscheidung zur Einstellung eines Datenflusses von von den gekoppelten Applikationen bereitgestellten paketierten Daten zumindest in Abhängigkeit von dem ermittelten aktuellen Netzwerkstatus. Folglich entscheidet die Entscheidungseinheit, welche der gekoppelten Applikationen welche paketierten Daten, insbesondere hinsichtlich Datenmenge und hinsichtlich Zeitpunkt oder Zeitpunkten der Übertragungen, an das Routingmodul übertragen darf. Die Entscheidung gibt insbesondere an, von welcher Applikation oder von welchen Applikationen die paketierten Daten durch das Netzwerkmodul über das Kommunikationsnetzwerk zu übertragen sind.

Die Netzwerkschnittstelleneinheit setzt dann diese Entscheidung der Entscheidungseinheit um und ist dabei dazu eingerichtet, den Datenfluss der von den gekoppelten Applikationen bereitgestellten paketierten Daten gemäß der bereitgestellten Entscheidung einzustellen. Vorzugsweise ist die Netzwerkschnittstelleneinheit dazu eingerichtet, Kommunikationsressourcen für die gekoppelten Applikationen zur Einstellung des Datenflusses gemäß der bereitgestellten Entscheidung zuzuteilen. Das Routingmodul bewirkt dann die weitere Übertragung der paketierten Daten über die Kommunikationsmodule an zumindest eines der M weiteren elektronischen Systeme des Kommunikationsnetzwerks.

Durch die vorliegende Einstellung des Datenflusses durch das Netzwerkmodul ist es vorteilhafterweise möglich, die Ressourcen in dem Kommunikationsnetzwerk auch für unterschiedlich priorisierte, konkurrierende Applikationen (Anwendungen) bedarfsgerecht zuzuteilen. Insbesondere kann durch die Überwachung des aktuellen Netzwerkstatus eine potenzielle Überlastsituation in dem Kommunikationsnetzwerk erkannt und folglich verhindert werden. Beispielsweise können die angeschlossenen Kommunikationsmodule, beispielsweise Funkgeräte, vor Überlast geschützt werden.

Beispielsweise sind taktische Funkgeräte in militärischen Kommunikationsnetzen vorzugsweise über Warteschlangen oder Zwischenspeicher an das Routingmodul gekoppelt. Dadurch, dass die taktischen Funkgeräte durch die vorliegende Einstellung des Datenflusses vor Überlast geschützt werden können, können auch die Zwischenspeicher oder interne Warteschlangen der Funkgeräte auf einem konstant niedrigen Füllstand gehalten werden. Hierdurch werden auch ungewünschte Warteschlangenänderungen unterdrückt.

Insgesamt sind eine dynamische Ressourcenzuweisung und Entscheidung für mehrere militärische und zivile Applikationen bei einer heterogenen Kommunikationsinfrastruktur des Kommunikationsnetzwerkes möglich. Durch die Entscheidung zur Einstellung des Datenflusses kann außerdem eine Kommunikation von nutzerseitig hochpriorisierten Applikationen unter adversen Bedingungen aufrechterhalten werden. Hierbei ist insbesondere auch eine Ende-zu-Ende-Qualitätssicherung der Kommunikationsverbindung zwischen mehreren elektronischen Systemen möglich.

Der aktuelle Netzwerkstatus umfasst insbesondere Informationen zur Verfügbarkeit der gekoppelten Systeme und/oder deren Kommunikationsmodulen, Informationen zu Prioritäten, insbesondere unterschiedlichen Prioritäten der gekoppelten Systeme, Informationen zu QoS (Quality of Service) der gekoppelten Systeme und/oder Informationen zu verfügbaren Bandbreiten und/oder Datenübertragungsraten. Der aktuelle Netzwerkstatus kann auch als aktueller Netzwerkzustand oder aktueller globaler Netzwerkzustand bezeichnet werden.

Die gekoppelten Kommunikationsmodule umfassen insbesondere unterschiedliche Kommunikationsmodule. Damit kann das Kommunikationsnetzwerk auch als heterogenes Kommunikationsnetzwerk bezeichnet werden. Die Kommunikationsmodule können beispielsweise eine Anzahl von taktischen Funkgeräten, insbesondere eine Anzahl von VHF-Sende-/Empfangseinheiten (VHF; Very High Frequency), eine Anzahl von UHF-Sende-/Empfangseinheiten (UHF; Ultra High Frequency) und eine Anzahl von LTE-Modulen umfassen. Das Routingmodul kann auch als Router bezeichnet werden.

Die Applikationen sind insbesondere unterschiedlich priorisierte, konkurrierende Anwendungen. Beispiele für Applikationen umfassen Bodenapplikationen (Land Applications), Applikationen für das Informationsmanagement (Information Management Applications), medizinische Applikationen (Medical Applications) sowie Applikationen für Kommunikation und Zusammenarbeit (Communication and Collaboration Applications).

### Bodenapplikationen

Die Bodenapplikationen ermöglichen es den Benutzern, Informationen, welche die Hauptfunktionen von Bodenoperationen unterstützen, zu sammeln, zu verarbeiten, zu präsentieren und zu verteilen. Bodenoperationen sind die Gesamtheit der militärischen Aktivitäten, die von Bodenstreitkräften durchgeführt werden, um ein gewünschtes Maß an Kontrolle innerhalb des Verantwortungsbereichs am Boden zu erreichen und aufrechtzuerhalten und, falls erforderlich, See-, Luft- und Raumfahrtoperationen zu unterstützen. Beispiele für Bodenapplikationen sind Manöver, Feuerunterstützung, Luftverteidigung, Einsatzführung, Aufklärung, Bewegungsfähigkeit und Überlebensfähigkeit sowie Unterstützung im Kampfeinsatz.

Beispiele hierzu umfassen: Blueforce-Tracking, Karte/Lage-Applikation, Steuerungsanwendungen für taktische unbemannte Boden- und Luftfahrzeuge, Applikationen für Aufklärungsdatenverarbeitung und -anzeige.

### Applikationen für das Informationsmanagement

Die Applikationen für das Informationsmanagement (IM) ermöglichen es den Benutzern, die Sicherheit und die Verwaltung des Informationsaustauschs für die Informationsüberlegenheit in einem integrierten und föderierten Netzwerk für den Informationsaustausch aufrechtzuerhalten. Sie unterstützen insbesondere die Mitarbeiter, denen die formale Verantwortung für bestimmte IM-Rollen für Planung, Archivierung, Aufsicht oder Registrierung übertragen ist. Unter anderem kommen IM-Funktionen der Informationssicherung, der Informationssicherheit und des Identitätsmanagements in anderen Applikationsbereichen der Taxonomie zum Ausdruck. Grundlegende Informationsmanagement-Funktionen werden allen Informationssystemen und Applikationen durch die Informationsmanagementdienste zur Verfügung gestellt.

Ein Beispiel hierfür ist eine grafische Benutzeroberfläche, die die Netzwerklage visualisiert.

### Medizinische Applikationen

Die medizinischen Applikationen ermöglichen es den Benutzern, medizinisches Situationsbewusstsein (z.B. medizinische Fähigkeiten, Bedarfsermittlung und Beurteilung der medizinischen Nachhaltigkeit), welches in ein gemeinsames Operationsbild (Common Operational Picture, COP) eingegeben werden, durch Automatisierung und Standardisierung des Informationsaustauschs zwischen nationalen und anderen Systemen bereitzustellen, und die rechtzeitige Bereitstellung, den Austausch und die Verwaltung der dafür erforderlichen Daten sicherzustellen, um medizinische Planung, medizinisches Management, medizinische Aufklärung, Gesundheitsüberwachung und klinische Unterstützung zu ermöglichen.

Ein Beispiel hierfür ist eine Applikation, die das Melden von Verwundeten und die Koordination von Verwundetentransporten unterstützt.

### Applikationen für Kommunikation und Zusammenarbeit

Die Applikationen für Kommunikation und Zusammenarbeit ermöglichen es den Benutzern, effektiver den Austausch von Informationen und Unternehmenswissen zwischen Benutzern über verschiedene geographische Standorte zu unterstützen. Sie fördern eine effiziente und effektive Umgebung für die Koordination und Zusammenarbeit zwischen den Benutzern bei der Erzielung bestimmter und sinnvoller Ergebnisse bei gemeinsamen Aktivitäten. Zu den Fähigkeiten, die sie unterstützen, gehören Konferenzschaltung, digitale Nachrichtenübermittlung, kollaboratives Arbeiten und soziale Netzwerke. Applikationen für Kommunikation und Zusammenarbeit unterstützen maßgeschneiderte Benutzerschnittstellen, die speziell auf den zu verwendenden Kommunikationskanal und das zu verwendende Werkzeug sowie die durchzuführende Zusammenarbeit zugeschnitten sind.

Die Funktionalität zur Kommunikation, zum Zugang und zur Bereitstellung von Informationen kann in Abhängigkeit der technischen Dienste, die sie bereitstellen, den Benutzerapplikationen, die sie unterstützen, und den Benutzergeräten (Metadaten) der Verbraucher, die auf sie zugreifen, eingeschränkt oder erweitert werden. Um effektiv genutzt werden zu können, können Applikationen für Kommunikation und Zusammenarbeit eingesetzt werden, um problemlos integrierte, konsolidierte, kohärente und interoperable Dienste und Funktionen bereitzustellen.

Solche Applikationen können in einem einzigen Paket als vereinheitlichte Kommunikations- und Zusammenarbeitsplattformen bereitgestellt werden. Hierbei ist vorzugsweise die Sicherung und Verwaltung des Informations- und Wissensaustauschs zu gewährleisten und es ist insbesondere sicherstellen, dass zusammenarbeitende Benutzer die richtigen Informationen am richtigen Ort und zur richtigen Zeit haben und in der Lage sind, miteinander in Verbindung zu bleiben.

Beispiele hierzu umfassen: Chat oder Instant Messaging, Formales Messaging, Videotelefonie, Live Video on Demand, Streaming Dienste, Applikationen zur Generierung eines gemeinsamen Lagebildes und Zielübergabe-Applikationen.

Gemäß einer Ausführungsform sind die Ermittlungseinheit, die Entscheidungseinheit und die Netzwerkschnittstelleneinheit in Serie in der Einstelleinheit angeordnet. Die Serienschaltung der Ermittlungseinheit, der Entscheidungseinheit und der Netzwerkschnittstelleneinheit bildet vorzugsweise eine Pipeline in der Einstell¬einheit aus.

Gemäß dem ersten Aspekt sind die Ermittlungseinheit, die Entscheidungseinheit und die Netzwerkschnittstelleneinheit derart angeordnet und eingerichtet, dass sie zusammen mit dem Routingmodul einen Regelkreis zur Einstellung des Datenflusses von von den gekoppelten Applikationen bereitgestellten paketierten Daten an das Routingmodul bilden. Der Regelkreis ist insbesondere ein geschlossener Regelkreis.

Dabei bilden die Ermittlungseinheit, die Entscheidungseinheit, die Netzwerkschnittstelleneinheit und das Routingmodul den Regelkreis mittels der Schnittstelleneinheit und einer weiteren Schnittstelleneinheit, welche das Routingmodul mit der Einstelleinheit koppelt. Durch den Regelkreis kann eine heterogene Kommunikationsinfrastruktur vorteilhafterweise effektiv und effizient genutzt werden.

Der Regelkreis kann vorteilhafterweise unmittelbar auf Änderungen im Kommunikationsnetzwerk reagieren. Beispielsweise bedingt eine Änderung im Kommunikationsnetzwerk insbesondere eine Änderung des aktuellen Netzwerkstatus, der von der Ermittlungseinheit ermittelbar ist, wodurch sich folglich die von der Entscheidungseinheit getroffene Entscheidung ändern kann. Damit kann der vorliegende Regelkreis insbesondere mit minimaler Latenzzeit auf einen geänderten Netzwerkstatus reagieren und potenzielle Überlasten im Kommunikationsnetzwerk verhindern.

Gemäß einer weiteren Ausführungsform ist die Netzwerkschnittstelleneinheit dazu eingerichtet, Kommunikationsressourcen für die gekoppelten Applikationen zur Einstellung des Datenflusses gemäß der bereitgestellten Entscheidung zuzuteilen.

Die zugeteilten Kommunikationsressourcen umfassen vorzugsweise zugeteilte Sendezeitpunkte, zugeteilte Bandbreiten, zugeteilte Datenübertragungsraten und/oder zugeteilten Quality of Service (QoS).

Gemäß einer weiteren Ausführungsform ist die Entscheidungseinheit dazu eingerichtet, die Entscheidung zur Einstellung des Datenflusses in Abhängigkeit von dem ermittelten aktuellen Netzwerkstatus des Kommunikationsnetzwerks und von von den Applikationen empfangenen Anforderungen bereitzustellen. Die Anforderungen sind insbesondere QoS-Anforderungen (QoS; Quality-of-Service).

Die Applikationen können unterschiedliche QoS-Anforderungen haben. In Abhängigkeit dessen kann die Entscheidung zur Einstellung des Datenflusses verändert werden.

Gemäß einer weiteren Ausführungsform ist die Entscheidungseinheit dazu eingerichtet, die Entscheidung zur Einstellung des Datenflusses in Abhängigkeit von dem ermittelten aktuellen Netzwerkstatus des Kommunikationsnetzwerks, von den Applikationen empfangenen Anforderungen, insbesondere QoS-Anforderungen, und von den Applikationen zugeordneten Prioritäten bereitzustellen.

Insbesondere können den verschiedenen Applikationen unterschiedliche Prioritäten zugeordnet sein oder werden. Diese unterschiedlichen Prioritäten für die Applikationen können mit oder ohne die unterschiedlichen QoS-Anforderungen die Entscheidung zur Einstellung des Datenflusses beeinflussen.

Gemäß einer weiteren Ausführungsform ist die Entscheidungseinheit dazu eingerichtet, die Entscheidung zur Einstellung des Datenflusses in Abhängigkeit von dem ermittelten aktuellen Netzwerkstatus des Kommunikationsnetzwerks, von den Applikationen empfangenen Anforderungen, insbesondere QoS-Anforderungen, von den Applikationen zugeordnete Prioritäten und von zur Einstellung des Datenflusses relevanten Parametern zu den gekoppelten Applikationen bereitzustellen.

Gemäß einer weiteren Ausführungsform umfasst das Netzwerkmodul eine weitere Schnittstelleneinheit zum Koppeln eines taktischen Service-Registers. Das taktische Service-Register speichert die zur Einstellung des Datenflusses relevanten Parameter zu den gekoppelten Applikationen.

Auch diese zur Einstellung des Datenflusses relevanten applikationsspezifischen Parameter können die zu treffende Entscheidung zur Einstellung des Datenflusses beeinflussen. Durch die Verwendung des taktischen Service-Registers können diese Parameter über die Zeit auch verändert oder eingestellt werden.

Gemäß einer weiteren Ausführungsform ist die Entscheidungseinheit dazu eingerichtet, mit zumindest einer der gekoppelten Applikationen die zuzuteilenden Kommunikationsressourcen und/oder Anforderungen an die von der gekoppelten Applikation bereitzustellenden paketierten Daten unter Verwendung eines Verhandlungsmechanismus auszuhandeln.

Der Verhandlungsmechanismus kann zur Zuteilung von Kommunikationsressourcen für die Applikationen genutzt werden. Beispielsweise kann eine solche Applikation mit der Entscheidungseinheit bestimmte Parameter für die Übertragung der paketierten Daten aushandeln. Wenn beispielsweise ausgehandelt wird, dass die Applikation zwar Bilddaten zu einem bestimmten Zeitpunkt übertragen darf, aber nur mit einer reduzierten Datenübertragungsrate oder reduzierter Bandbreite, so kann diese Aushandlung bedingen, dass die Applikation zwar Standbilder, aber keine Bewegtbilder überträgt.

Gemäß einer weiteren Ausführungsform ist die Einstelleinheit dazu eingerichtet, den ermittelten aktuellen Netzwerkstatus zumindest einer der Applikationen, insbesondere auf Anfrage der zumindest einen Applikation, mitzuteilen.

Somit können auch die Applikationen Zugriff auf den Netzwerkstatus des Kommunikationsnetzwerks haben. Eine mit einer solchen Funktion ausgestattete Applikation kann den mitgeteilten aktuellen Netzwerkstatus nutzen, um insbesondere die bereitgestellten paketierten Daten an den aktuellen Netzwerkstatus anzupassen. Allerdings können auch Applikationen mit dem Netzwerkmodul verbunden werden, welche eine solche Funktion nicht aufweisen.

Gemäß einer weiteren Ausführungsform umfassen die Kommunikationsmodule eine Anzahl von taktischen Funkgeräten.

Gemäß einer weiteren Ausführungsform ist die Ermittlungseinheit dazu eingerichtet, den aktuellen Netzwerkstatus des Kommunikationsnetzwerks in Abhängigkeit von von den M weiteren elektronischen Systemen über das Routingmodul empfangenen Statusinformationen zu den M weiteren elektronischen Systemen zu ermitteln.

Die Statusinformationen können Informationen zur Verfügbarkeit des jeweiligen elektronischen Systems und/oder zu Datenübertragungsraten und/oder Bandbreiten der Kommunikationsmodule des jeweiligen elektronischen Systems umfassen. Beispielsweise können diese Statusinformationen auch Priorisierungsinformationen einzelner elektronischer Systeme umfassen, so beispielsweise, wenn ein bestimmtes Kommunikationsmodul eines angeschlossenen elektronischen Systems von einem Gruppenführer benutzt wird.

Gemäß einer weiteren Ausführungsform ist das jeweilige elektronische System als ein Fahrzeugsystem, als ein Gefechtsstandsystem oder als ein Soldatensystem ausgebildet.

Die jeweilige Einheit, zum Beispiel die Ermittlungseinheit oder die Entscheidungseinheit, kann hardwaretechnisch und/oder auch softwaretechnisch implementiert sein. Bei einer hardwaretechnischen Implementierung kann die Einheit als Vorrichtung oder als Teil einer Vorrichtung, zum Beispiel als Computer oder als Mikroprozessor, ausgebildet sein. Bei einer softwaretechnischen Implementierung kann die Einheit als Computerprogrammprodukt, als eine Funktion, als eine Routine, als Teil eines Programmcodes oder als ausführbares Objekt ausgebildet sein.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikations-Netzwerk durch die Übertragung einer entsprechenden Datei mit dem Computerprogrammprodukt oder dem Computerprogramm-Mittel erfolgen.

Gemäß einem zweiten Aspekt wird ein elektronisches System einer Einsatzkraft vorgeschlagen. Das elektronische System umfasst ein Netzwerkmodul gemäß dem ersten Aspekt oder gemäß einer der Ausführungsformen des ersten Aspekts. Die für den ersten Aspekt beschriebenen Ausführungsformen und Merkmale gelten für den zweiten Aspekt entsprechend.

Gemäß einem dritten Aspekt wird ein Kommunikationsnetzwerk vorgeschlagen, welches eine Mehrzahl N von elektronischen Systemen koppelt, wobei das jeweilige elektronische System ein Netzwerkmodul gemäß dem ersten Aspekt oder gemäß einer der Ausführungsformen des ersten Aspekts umfasst.

Die für den ersten Aspekt beschriebenen Ausführungsformen und Merkmale gelten für den dritten Aspekt entsprechend.

Gemäß einem vierten, nicht beanspruchten, Aspekt wird ein Verfahren zum Betreiben eines Netzwerkmoduls eines elektronischen Systems einer Einsatzkraft für ein eine Mehrzahl N von elektronischen Systemen koppelndes Kommunikationsnetzwerk vorgeschlagen, mit N ≥ 2. Das Kommunikationsnetzwerk ist insbesondere ein militärisches Kommunikationsnetzwerk, bevorzugt ein IP-Netzwerk (IP; Internet-Protokoll). Dabei weist das Verfahren zum Betreiben des Netzwerkmoduls auf:
Koppeln einer Mehrzahl von Applikationen an das Netzwerkmodul, wobei die jeweilige Applikation dazu eingerichtet ist, über das Kommunikationsnetzwerk zu übertragende paketierte Daten bereitzustellen,

Koppeln eines Routingmoduls an das Netzwerkmodul, welches zum Koppeln einer Mehrzahl von Kommunikationsmodulen eingerichtet ist, wobei das jeweilige Kommunikationsmodul zum Austauschen von paketierten Daten mit zumindest einem Kommunikationsmodul eines der N-1 weiteren elektronischen Systeme eingerichtet ist,

Ermitteln eines aktuellen Netzwerkstatus des Kommunikationsnetzwerks in Abhängigkeit von von einer Mehrzahl M der weiteren elektronischen Systeme über das Routingmodul empfangenen Daten, mit 2 ≤ M ≤ N-1,
Bereitstellen einer Entscheidung zur Einstellung eines Datenflusses von von den gekoppelten Applikationen bereitgestellten paketierten Daten an das Routingmodul zumindest in Abhängigkeit von dem ermittelten aktuellen Netzwerkstatus, und
Einzustellen des Datenflusses der von den gekoppelten Applikationen bereitgestellten paketierten Daten gemäß der bereitgestellten Entscheidung.

Die für den ersten Aspekt beschriebenen Ausführungsformen und Merkmale gelten für den vierten Aspekt entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Im Weiteren wird die Erfindung anhand von bevorzugten Ausführungsbeispielen unter Bezugnahme auf die beigelegten Figuren näher erläutert.
- Fig. 1: zeigt ein schematisches Blockschaltbild eines ersten Ausführungsbeispiels eines Netzwerkmoduls eines elektronischen Systems einer Einsatzkraft für ein eine Mehrzahl von elektronischen Systemen koppelndes Kommunikationsnetzwerk;
- Fig. 2: zeigt ein schematisches Blockschaltbild eines zweiten Ausführungsbeispiels eines Netzwerkmoduls eines elektronischen Systems einer Einsatzkraft für ein eine Mehrzahl von elektronischen Systemen koppelndes Kommunikationsnetzwerk; und
- Fig. 3: zeigt ein schematisches Bild eines Ausführungsbeispiels eines Kommunikationsnetzwerks mit einer Mehrzahl von elektronischen Systemen.

In den Figuren sind gleiche oder funktionsgleiche Elemente mit denselben Bezugszeichen versehen worden, sofern nichts anderes angegeben ist.

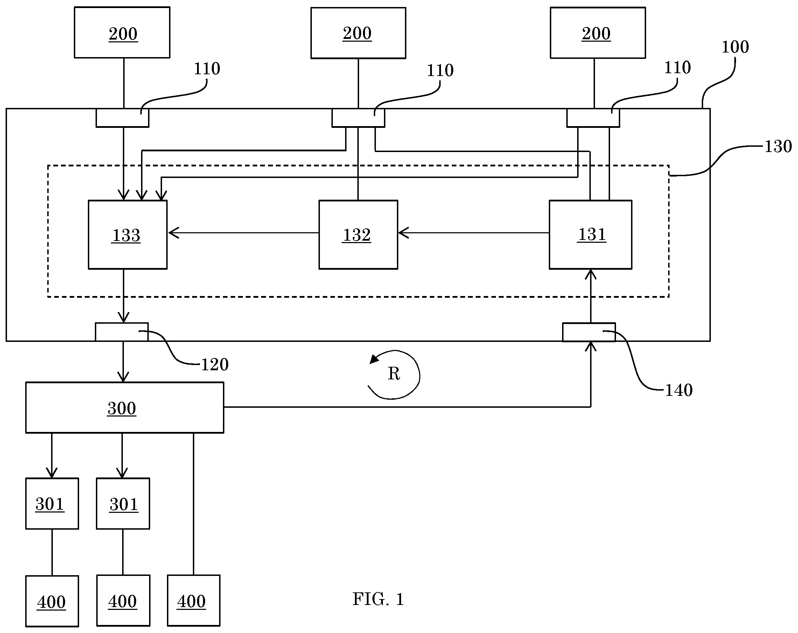

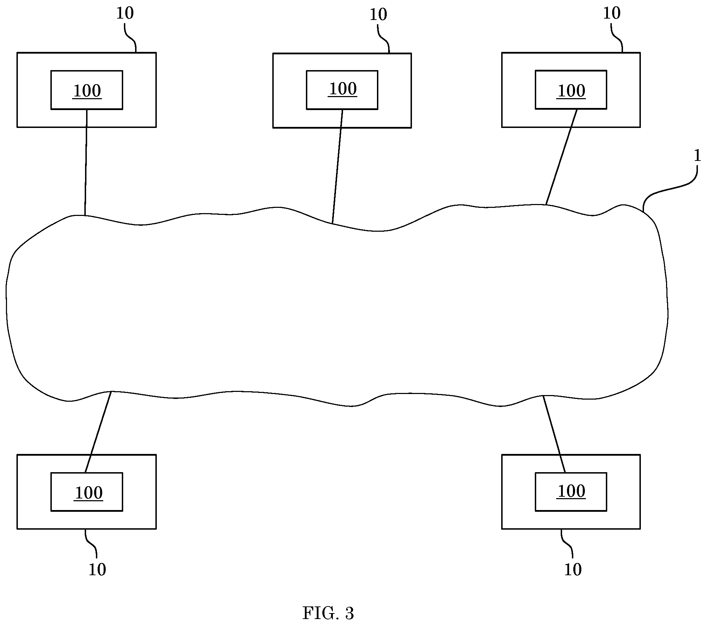

Fig. 1 zeigt ein schematisches Blockschaltbild eines ersten Ausführungsbeispiels eines Netzwerkmoduls 100 eines elektronischen Systems 10 einer Einsatzkraft für ein eine Mehrzahl N von elektronischen Systemen 10 koppelndes Kommunikationsnetzwerk 1. Ein Beispiel eines solchen Kommunikationsnetzwerks 1 ist in Fig. 3 dargestellt. Das Kommunikationsnetzwerk 1 ist vorzugsweise ein IPbasiertes Netzwerk. Dabei kann das Kommunikationsnetzwerk 1 auch als heterogenes Kommunikationsnetzwerk bezeichnet werden.

Beispiele für elektronische Systeme 10 umfassen Fahrzeugsysteme, Gefechtsstandsysteme und Soldatensysteme. Ohne Einschränkung der Allgemeinheit zeigt hierbei die Fig. 3 fünf elektronische Systeme 10 (mit N = 5), welche mittels des Kommunikationsnetzwerks 1 gekoppelt sind. Die elektronischen Systeme 10 sind insbesondere unterschiedlich zueinander.

Das Netzwerkmodul 100 der Fig. 1 umfasst eine Mehrzahl von Schnittstellen 110 zum Koppeln einer Mehrzahl von Applikationen 200. Ohne Einschränkung der Allgemeinheit sind in der Fig. 1 drei Applikationen 200 dargestellt. Die jeweilige Applikation 200 ist dazu eingerichtet, über das Kommunikationsnetzwerk 1 zu übertragende paketierte Daten bereitzustellen. Die Applikationen sind insbesondere unterschiedlich priorisierte, konkurrierende Anwendungen.

Ferner umfasst das Netzwerkmodul 100 eine Schnittstelleneinheit 120 zum Koppeln eines Routingmoduls 300. Das Routingmodul 300 kann auch als Router bezeichnet werden. Das Routingmodul 300 ist zum Koppeln einer Mehrzahl von Kommunikationsmodulen 400 eingerichtet. Die Kommunikationsmodule 400 können beispielsweise eine Anzahl von taktischen Funkgeräten, insbesondere eine Anzahl von VHF-Sende-/Empfangseinheiten (VHF; Very High Frequency), eine Anzahl von UHF-Sende-/Empfangseinheiten (UHF; Ultra High Frequency) und eine Anzahl von LTE-Modulen umfassen.

Beispielsweise ist in der Fig. 1 das linke Kommunikationsmodul 400 als eine VHF-Sende-/Empfangseinheit, das mittlere Kommunikationsmodul 400 als eine UHF-Sende-/Empfangseinheit und das rechte Kommunikationsmodul 400 als ein LTE-Modul ausgebildet. Dabei zeigt die Fig. 1, dass die VHF-Sende-/Empfangseinheit 400 und die UHF-Sende-/Empfangseinheit 400 über einen jeweiligen Zwischenspeicher 301, insbesondere eine Radio Protection Queue, mit dem Routingmodul 300 gekoppelt sind.

Ferner weist das Netzwerkmodul 100 eine Einstelleinheit 130 auf, welche zwischen den Schnittstellen 110 und der Schnittstelleneinheit 120 des Netzwerkmoduls 100 gekoppelt ist. Die Einstelleinheit 130 umfasst eine Ermittlungseinheit 131, eine Entscheidungseinheit 132 sowie eine Netzwerkschnittstelleneinheit 133, die zwischen den Schnittstellen 110 und der Schnittstelleneinheit 120 verbunden ist. Dabei sind die Ermittlungseinheit 131, die Entscheidungseinheit 132 und die Netzwerkschnittstelleneinheit 133 vorzugsweise in Serie in der Einstelleinheit 130 angeordnet und bilden dabei vorzugsweise eine Pipeline oder Verarbeitungspipeline aus.

Die Ermittlungseinheit 131 ist dazu eingerichtet, einen aktuellen Netzwerkstatus des Kommunikationsnetzwerks 1 in Abhängigkeit von von einer Mehrzahl M der weiteren elektronischen Systeme 10 über das Routingmodul 300 empfangenen Daten zu ermitteln, mit 2 ≤ M ≤ N-1. Für das Beispiel der Fig. 3 mit N = 6, ist M = 5.

Der aktuelle Netzwerkstatus umfasst insbesondere Informationen zur Verfügbarkeit der gekoppelten Systeme 10 und/oder deren Kommunikationsmodulen 400, Informationen zu Prioritäten, insbesondere unterschiedlichen Prioritäten der gekoppelten Systeme 10, Informationen zu QoS (Quality of Service) der gekoppelten Systeme 10 und/oder Informationen zu verfügbaren Bandbreiten und/oder Datenübertragungsraten. Der aktuelle Netzwerkstatus kann auch als aktueller Netzwerkzustand oder aktueller globaler Netzwerkzustand bezeichnet werden.

Die Entscheidungseinheit 132 ist dazu eingerichtet, eine Entscheidung zur Einstellung eines Datenflusses von von den gekoppelten Applikationen 200 bereitgestellten paketierten Daten an das Routingmodul 300 zumindest in Abhängigkeit von dem ermittelten aktuellen Netzwerkstatus bereitzustellen.

Demnach entscheidet die Entscheidungseinheit 132, welche der gekoppelten Applikationen 200 welche paketierten Daten, insbesondere hinsichtlich Datenmenge und hinsichtlich Zeitpunkt oder Zeitpunkten der Übertragungen, an das Routingmodul 300 übertragen darf. Das Routingmodul 300 bewirkt dann die weitere Übertragung der paketierten Daten über die Kommunikationsmodule 400 an zumindest eines der M weiteren elektronischen Systeme 10 des Kommunikationsnetzwerks 1.

Die Netzwerkschnittstelleneinheit 133 ist hierbei dazu eingerichtet, den Datenfluss der von den gekoppelten Applikationen 200 bereitgestellten paketierten Daten gemäß der bereitgestellten Entscheidung einzustellen. Insbesondere ist die Netzwerkschnittstelleneinheit 133 dazu eingerichtet, Kommunikationsressourcen für die gekoppelten Applikationen 200 zur Einstellung des Datenflusses gemäß der bereitgestellten Entscheidung zuzuteilen.

Die Entscheidung gibt insbesondere an, von welcher Applikation 200 oder von welchen Applikationen 200 die paketierten Daten durch das Netzwerkmodul 100 über das Kommunikationsnetzwerk 1 zu übertragen sind. Die Netzwerkschnittstelleneinheit 133 setzt dann diese Entscheidung der Entscheidungseinheit 132 um.

Wie in Fig. 1 gezeigt und mit dem Bezugszeichen R bezeichnet, sind die Ermittlungseinheit 131, die Entscheidungseinheit 132 und die Netzwerkschnittstelleneinheit 133 derart angeordnet und eingerichtet, dass sie zusammen mit dem Routingmodul 300 einen Regelkreis R zur Einstellung des Datenflusses von von den gekoppelten Applikationen 200 bereitgestellten paketierten Daten an das Routingmodul 300 bilden. Damit wird der Datenfluss der paketierten Daten von den Applikationen 200 durch das Netzwerkmodul 100 geregelt.

Ferner ist die Entscheidungseinheit132 insbesondere dazu eingerichtet, die Entscheidung zur Einstellung des Datenflusses in Abhängigkeit von dem ermittelten aktuellen Netzwerkstatus und von von den Applikationen 200 empfangenen Anforderungen, insbesondere QoS-Anforderungen bereitzustellen. In dem Beispiel der Fig. 1 ist lediglich die mittlere Applikation 200 mit der Entscheidungseinheit 132 über entsprechende Schnittstellen (nicht dediziert gezeigt) gekoppelt. Folglich kann - ohne Einschränkungen der Allgemeinheit - in der Fig. 1 nur die mittlere Applikation 200 ihre Anforderungen an die Entscheidungseinheit 132 mitteilen. Die rechte Applikation 200 sowie die linke Applikation 200 sind in dem Beispiel der Fig. 1 hierzu nicht geeignet.

Des Weiteren ist die Entscheidungseinheit 132 dazu eingerichtet, die Entscheidung zur Einstellung des Datenflusses in Abhängigkeit von dem ermittelten aktuellen Netzwerkstatus des Kommunikationsnetzwerks 1, von den Applikationen 200 empfangenen Anforderungen und von den Applikationen 200 zugeordneten Prioritäten bereitzustellen. Hierzu sei angemerkt, dass den Applikationen 200 unterschiedliche Prioritäten zugeordnet sein können. Beispielsweise kann die linke Applikation eine höchste Priorität, die mittlere Applikation 200 eine mittlere Priorität und die rechte Applikation 200 eine niedrigste Priorität zum Senden von paketierten Daten über das Netzwerkmodul 100 haben.

Für die Entscheidung zur Einstellung des Datenflusses können auch hierfür relevante Parameter zu den gekoppelten Applikationen 200 verwendet werden.

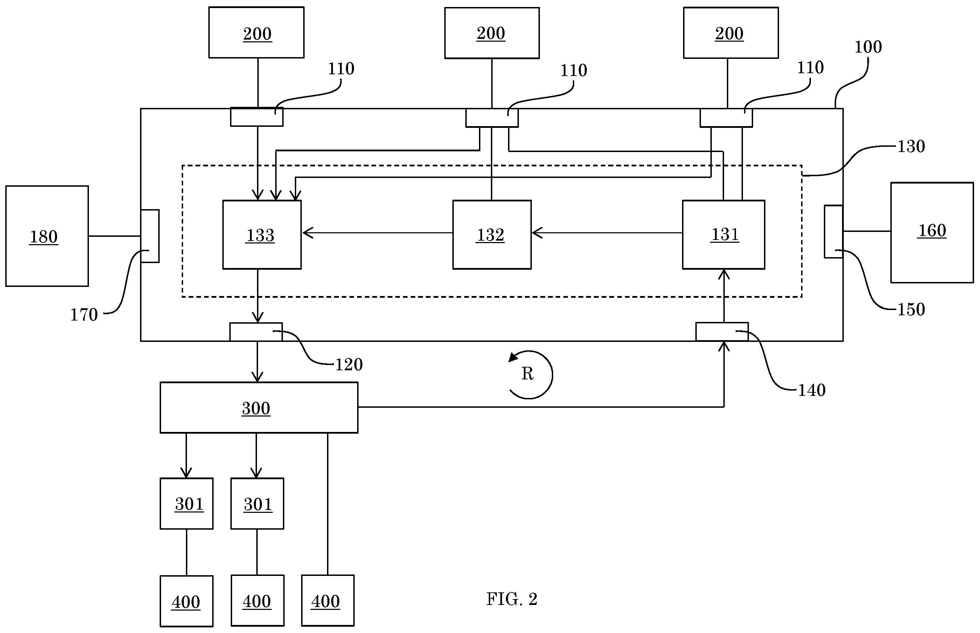

Hierzu zeigt die Fig. 2 ein schematisches Blockschaltbild eines zweiten Ausführungsbeispiels eines Netzwerkmoduls 100. Das zweite Ausführungsbeispiel der Fig. 2 umfasst alle Merkmale des ersten Ausführungsbeispiels der Fig. 1. Darüber hinaus umfasst das Netzwerkmodul 100 der Fig. 2 eine weitere Schnittstelleneinheit 150 zum Koppeln eines taktischen Service-Registers 160. Das taktische Service-Register 160 speichert insbesondere die zur Einstellung des Datenflusses relevanten Parameter zu den gekoppelten Applikationen 200.

Ferner hat das Netzwerkmodul 100 der Fig. 2 eine weitere Schnittstelleneinheit 170 zum Koppeln eines Service-Registers 180. Das Service-Register 180 speichert insbesondere applikationsspezifische Informationen zu den gekoppelten Applikationen 200.

Außerdem kann die Entscheidungseinheit 132 noch eine weitere Funktion haben. Die Entscheidungseinheit 132 kann dazu eingerichtet sein, mit zumindest einer der gekoppelten Applikationen 200, in den Beispielen der Fig. 1 und der Fig. 2 mit der mittleren Applikation 200, die zuzuteilenden Kommunikationsressourcen und/oder Anforderungen an die von der gekoppelten Applikation 200 bereitzustellenden paketierten Daten unter Verwendung eines Verhandlungsmechanismus auszuhandeln.

Auch hierzu kann die in Fig. 1 und Fig. 2 gezeigte Verbindung zwischen der mittleren Applikation 200 und der Entscheidungseinheit 132 verwendet werden, um hierfür notwendige Daten auszutauschen.

Des Weiteren ist vorzugsweise die Ermittlungseinheit 131 dazu eingerichtet, den ermittelten aktuellen Netzwerkstatus zumindest einer der Applikationen 200, insbesondere auf Anfrage, mitzuteilen. In den Beispielen der Fig. 1 und der Fig. 2 sind hierzu die mittlere Applikation 200 und die rechte Applikation 200 mittels geeigneter Schnittstellen (nicht dediziert gezeichnet) mit der Ermittlungseinheit 131 verbunden, um diese Daten, d. h. die Anfrage und die Antwort mit dem aktuellen Netzwerkstatus, auszutauschen.

Dabei ermittelt die Ermittlungseinheit 131 den aktuellen Netzwerkstatus des Kommunikationsnetzwerks 1 vorzugsweise in Abhängigkeit von von den M weiteren elektrischen Systemen 10 über das Routingmodul 300 empfangenen Statusinformationen zu den M weiteren elektronischen Systemen 10.

Obwohl die vorliegende Erfindung anhand von Ausführungsbeispielen beschrieben wurde, ist sie vielfältig modifizierbar.

### BEZUGSZEICHENLISTE

- 1: Kommunikationsnetzwerk
- 10: elektronisches System
- 100: Netzwerkmodul
- 110: Schnittstelle
- 120: Schnittstelleneinheit
- 130: Einstelleinheit
- 131: Ermittlungseinheit
- 132: Entscheidungseinheit
- 133: Netzwerkschnittstelleneinheit
- 140: Schnittstelleneinheit
- 150: Schnittstelleneinheit
- 160: taktisches Service-Register
- 170: Schnittstelleneinheit
- 180: Service-Register
- 200: Applikation
- 300: Routingmodul
- 301: Zwischenspeicher (Radio Protection Queue)
- 400: Kommunikationsmodul
- R: Regelkreis

## Patentansprüche

1. Netzwerkmodul (100) eines elektronischen Systems (10) einer Einsatzkraft für ein eine Mehrzahl N von elektronischen Systemen (10) koppelndes Kommunikationsnetzwerk (1), mit:
einer Mehrzahl von Schnittstellen (110) zum Koppeln einer Mehrzahl von Applikationen (200), wobei die jeweilige Applikation (200) dazu eingerichtet ist, über das Kommunikationsnetzwerk (1) zu übertragende paketierte Daten bereitzustellen,
einer Schnittstelleneinheit (120) zum Koppeln eines Routingmoduls (300), welches zum Koppeln einer Mehrzahl von Kommunikationsmodulen (400) eingerichtet ist, wobei das jeweilige Kommunikationsmodul (400) zum Austauschen von paketierten Daten mit zumindest einem Kommunikationsmodul (400) eines der N-1 weiteren elektronischen Systeme (10) eingerichtet ist, und
einer zwischen den Schnittstellen (110) und der Schnittstelleneinheit (120) koppelbaren Einstelleinheit (130), welche umfasst:
eine Ermittlungseinheit (131) zum Ermitteln eines aktuellen Netzwerkstatus des Kommunikationsnetzwerks (1) in Abhängigkeit von von einer Mehrzahl M der weiteren elektronischen Systeme (10) über das Routingmodul (300) empfangenen Daten, mit 2 ≤ M ≤ N-1,
eine Entscheidungseinheit (132) zum Bereitstellen einer Entscheidung zur Einstellung eines Datenflusses von von den gekoppelten Applikationen (200) bereitgestellten paketierten Daten an das Routingmodul (300) zumindest in Abhängigkeit von dem ermittelten aktuellen Netzwerkstatus, und
eine zwischen den Schnittstellen (110) und der Schnittstelleneinheit (120) verbindbare Netzwerkschnittstelleneinheit (133), welche dazu eingerichtet ist, den Datenfluss der von den gekoppelten Applikationen (200) bereitgestellten paketierten Daten gemäß der bereitgestellten Entscheidung einzustellen, wobei
die Ermittlungseinheit (131), die Entscheidungseinheit (132) und die Netzwerkschnittstelleneinheit (133) derart angeordnet und eingerichtet sind, dass sie zusammen mit dem Routingmodul (300) einen Regelkreis (R) zur Einstellung des Datenflusses von von den gekoppelten Applikationen (200) bereitgestellten paketierten Daten an das Routingmodul (300) bilden.

2. Netzwerkmodul nach Anspruch 1,
**dadurch gekennzeichnet,**
**dass** der Regelkreis (R) als ein geschlossener Regelkreis ausgebildet ist.

3. Netzwerkmodul nach Anspruch 1 oder 2,
**dadurch gekennzeichnet,**
**dass** die Ermittlungseinheit (131), die Entscheidungseinheit (132) und die Netzwerkschnittstelleneinheit (133) in Serie in der Einstelleinheit (130) angeordnet sind.

4. Netzwerkmodul nach einem der Ansprüche 1 bis 3,
**dadurch gekennzeichnet,**
**dass** die Netzwerkschnittstelleneinheit (133) dazu eingerichtet ist, Kommunikationsressourcen für die gekoppelten Applikationen (200) zur Einstellung des Datenflusses gemäß der bereitgestellten Entscheidung zuzuteilen.

5. Netzwerkmodul nach einem der Ansprüche 1 bis 4,
**dadurch gekennzeichnet,**
**dass** die Entscheidungseinheit (132) dazu eingerichtet ist, die Entscheidung zur Einstellung des Datenflusses in Abhängigkeit von dem ermittelten aktuellen Netzwerkstatus des Kommunikationsnetzwerks (1) und von von den Applikationen (200) empfangenen Anforderungen oder QoS-Anforderungen bereitzustellen.

6. Netzwerkmodul nach einem der Ansprüche 1 bis 4,
**dadurch gekennzeichnet,**
**dass** die Entscheidungseinheit (132) dazu eingerichtet ist, die Entscheidung zur Einstellung des Datenflusses in Abhängigkeit von dem ermittelten aktuellen Netzwerkstatus des Kommunikationsnetzwerks (1), von den Applikationen (200) empfangenen Anforderungen oder QoS-Anforderungen und von den Applikationen (200) zugeordneten Prioritäten bereitzustellen.

7. Netzwerkmodul nach einem der Ansprüche 1 bis 4,
**dadurch gekennzeichnet,**
**dass** die Entscheidungseinheit (132) dazu eingerichtet ist, die Entscheidung zur Einstellung des Datenflusses in Abhängigkeit von dem ermittelten aktuellen Netzwerkstatus des Kommunikationsnetzwerks (1), von den Applikationen (200) empfangenen Anforderungen oder QoS-Anforderungen von den Applikationen (200) zugeordnete Prioritäten und von zur Einstellung des Datenflusses relevanten Parametern zu den gekoppelten Applikationen (200) bereitzustellen.

8. Netzwerkmodul nach Anspruch 7,
**gekennzeichnet durch**
eine weitere Schnittstelleneinheit (150) zum Koppeln eines taktischen Service-Registers (160), welches die zur Einstellung des Datenflusses relevanten Parameter zu den gekoppelten Applikationen (200) speichert.

9. Netzwerkmodul nach einem der Ansprüche 4 bis 8,
**dadurch gekennzeichnet,**
**dass** die Entscheidungseinheit (132) dazu eingerichtet ist, mit zumindest einer der gekoppelten Applikationen (200) die zuzuteilenden Kommunikationsressourcen und/oder Anforderungen an die von der gekoppelten Applikation (200) bereitzustellenden paketierten Daten unter Verwendung eines Verhandlungsmechanismus auszuhandeln.

10. Netzwerkmodul nach einem der Ansprüche 1 bis 9,
**dadurch gekennzeichnet,**
**dass** die Einstelleinheit (130) dazu eingerichtet ist, den ermittelten aktuellen Netzwerkstatus zumindest einer der Applikationen (200) oder auf Anfrage der zumindest einen Applikation mitzuteilen.

11. Netzwerkmodul nach einem der Ansprüche 1 bis 10,
**dadurch gekennzeichnet,**
**dass** die Kommunikationsmodule (400) eine Anzahl von taktischen Funkgeräten umfassen.

12. Netzwerkmodul nach einem der Ansprüche 1 bis 11,
**dadurch gekennzeichnet.**
**dass** die Ermittlungseinheit (131) dazu eingerichtet ist, den aktuellen Netzwerkstatus des Kommunikationsnetzwerks (1) in Abhängigkeit von von den M weiteren elektronischen Systemen (10) über das Routingmodul (300) empfangenen Statusinformationen zu den M weiteren elektronischen Systemen (10) zu ermitteln.

13. Netzwerkmodul nach einem der Ansprüche 1 bis 12,
**dadurch gekennzeichnet,**
**dass** das jeweilige elektronische System (10) als ein Fahrzeugsystem, als ein Gefechtsstandsystem oder als ein Soldatensystem ausgebildet ist.

14. Elektronisches System (10) einer Einsatzkraft, welches ein Netzwerkmodul (100) nach einem der Ansprüche 1 bis 13 umfasst.

15. Kommunikationsnetzwerk (1), welches eine Mehrzahl N von elektronischen Systemen (10) koppelt, wobei das jeweilige elektronische System (10) ein Netzwerkmodul (100) nach einem der Ansprüche 1 bis 13 umfasst.

## Claims

1. A network module (100) of an electronic system (10) of a deployed person for a communications network (1) coupling a plurality N of electronic systems (10), having:
a plurality of interfaces (110) for coupling a plurality of applications (200), each application (200) being configured to provide packetized data to be transmitted via the communications network (1);
an interface unit (120) for coupling a routing module (300) configured to couple a plurality of communications modules (400), each communications module (400) being configured to exchange packetized data with at least one communications module (400) of one of the N-1 further electronic systems (10); and
an adjusting unit (130) capable of being coupled between the interfaces (110) and the interface unit (120), comprising:
a determination unit (131) for determining a current network status of the communications network (1) depending on data received from a plurality M of the further electronic systems (10) via the routing module (300), where 2 ≤ M ≤ N-1;
a decision unit (132) for providing a decision for adjusting a data flow of packetized data provided by the coupled applications (200) to the routing module (300) at least as a function of the determined current network status; and
a network interface unit (133) capable of being connected between the interfaces (110) and the interface unit (120) and configured to adjust the data flow of the packetized data provided by the coupled applications (200) according to the provided decision, wherein
the determination unit (131), the decision unit (132), and the network interface unit (133) are disposed and configured such that they, together with the routing module (300), form a control circuit (R), particularly a closed-loop control circuit, for adjusting the data flow of packetized data provided by the coupled applications (200) to the routing module (300).

2. The network module according to claim 1,
**characterized in that**
the control circuit (R) is configured as a closed control circuit.

3. The network module according to claim 1 or 2,
**characterized in that**
the determination unit (131), the decision unit (132), and the network interface unit (133) are disposed in series in the adjusting unit (130).

4. The network module according to any one of the claims 1 through 3,
**characterized in that**
the network interface unit (133) is configured to allocate communications resources for the coupled applications (200) for adjusting the data flow according to the provided decision.

5. The network module according to any one of the claims 1 through 4,
**characterized in that**
the decision unit (132) is configured to provide the decision for adjusting the data flow depending on the determined current network status of the communications network (1) and on requirements, particularly QoS requirements, received from the applications (200).

6. The network module according to any one of the claims 1 through 4,
**characterized in that**
the decision unit (132) is configured to provide the decision for adjusting the data flow depending on the determined current network status of the communications network (1); on requirements, particularly QoS requirements, received from the applications (200); and on priorities associated with the applications (200).

7. The network module according to any one of the claims 1 through 4, **characterized in that**
the decision unit (132) is configured to provide the decision for adjusting the data flow depending on the determined current network status of the communications network (1); on requirements, particularly QoS requirements, received from the applications (200); on priorities associated with the applications (200); and on parameters for the coupled applications (200) relevant for adjusting the data flow.

8. The network module according to claim 7,
**characterized by**
a further interface unit (150) for coupling a tactical service register (160) for saving the relevant parameters for the coupled applications (200) for adjusting the data flow.

9. The network module according to any one of the claims 4 through 8,
**characterized in that**
the decision unit (132) is configured to use a negotiating mechanism to negotiate with at least one of the coupled applications (200) the communications resources to be allocated and/or the requirements for the packetized data to be provided by the coupled application (200).

10. The network module according to any one of the claims 1 through 9,
**characterized in that**
the adjusting unit (130) is configured to communicate the determined current network status to at least one of the applications (200), particularly when queried by the at least one application.

11. The network module according to any one of the claims 1 through 10,
**characterized in that**
the communications modules (400) comprise a number of tactical radio devices.

12. The network module according to any one of the claims 1 through 11,
**characterized in that**
the determination unit (131) is configured to determine the current network status of the communications network (1) as a function of status information about the M further electronic systems (10) received from the M further electronic systems (10) via the routing module (300).

13. The network module according to any one of the claims 1 through 12,
**characterized in that**
the corresponding electronic system (10) is implemented as a vehicle system, as a command post system, or as a soldier system.

14. An electronic system (10) of a deployed person, comprising a network module (100) according to any one of the claims 1 through 13.

15. A communications network (1) coupling a plurality N of electronic systems (10), wherein each electronic system (10) comprises a network module (100) according to any one of the claims 1 through 13.

## Revendications

1. Module de réseau (100) d'un système électronique (10) d'une personne déployée pour un réseau de communication (1) couplant une pluralité N de systèmes électroniques (10), ayant :
une pluralité d'interfaces (110) pour coupler une pluralité d'applications (200), chaque application (200) étant configurée pour fournir des données mises en paquets à transmettre via le réseau de communication (1) ;
une unité d'interface (120) pour coupler un module de routage (300) configuré pour coupler une pluralité de modules de communication (400), chaque module de communication (400) étant configuré pour échanger des données mises en paquets avec au moins un module de communication (400) de l'un des N-1 autres systèmes électroniques (10) ; et
une unité d'ajustement (130) capable d'être couplée entre les interfaces (110) et l'unité d'interface (120), comprenant :
une unité de détermination (131) pour déterminer un état de réseau actuel du réseau de communication (1) en fonction de données reçues d'une pluralité M des autres systèmes électroniques (10) via le module de routage (300), où 2 ≤ M ≤ N-1 ;
une unité de décision (132) pour fournir une décision pour ajuster un flux de données de données mises en paquets fournies par les applications couplées (200) au module de routage (300) au moins en fonction de l'état de réseau actuel déterminé ; et
une unité d'interface de réseau (133) capable d'être connectée entre les interfaces (110) et l'unité d'interface (120) et configurée pour ajuster le flux de données des données mises en paquets fournies par les applications couplées (200) selon la décision fournie, dans lequel
l'unité de détermination (131), l'unité de décision (132), et l'unité d'interface de réseau (133) sont disposées et configurées de sorte qu'elles forment, conjointement avec le module de routage (300), un circuit de commande (R), en particulier un circuit de commande en boucle fermée, pour ajuster le flux de données de données mises en paquets fournies par les applications couplées (200) au module de routage (300).

2. Module de réseau selon la revendication 1,
**caractérisé en ce que**
le circuit de commande (R) est configuré comme un circuit de commande en boucle fermée.

3. Module de réseau selon la revendication 1 ou 2,
**caractérisé en ce que**
l'unité de détermination (131), l'unité de décision (132), et l'unité d'interface de réseau (133) sont disposées en série dans l'unité d'ajustement (130).

4. Module de réseau selon l'une quelconque des revendications 1 à 3,
**caractérisé en ce que**
l'unité d'interface de réseau (133) est configurée pour allouer des ressources de communication pour les applications couplées (200) pour ajuster le flux de données selon la décision fournie.

5. Module de réseau selon l'une quelconque des revendications 1 à 4,
**caractérisé en ce que**
l'unité de décision (132) est configurée pour fournir la décision pour ajuster le flux de données en fonction de l'état de réseau actuel déterminé du réseau de communication (1) et des exigences, en particulier des exigences de QoS, reçues des applications (200).

6. Module de réseau selon l'une quelconque des revendications 1 à 4,
**caractérisé en ce que**
l'unité de décision (132) est configurée pour fournir la décision pour ajuster le flux de données en fonction de l'état de réseau actuel déterminé du réseau de communication (1) ; des exigences, en particulier des exigences de QoS, reçues des applications (200) ; et des priorités associées aux applications (200).

7. Module de réseau selon l'une quelconque des revendications 1 à 4,
**caractérisé en ce que**
l'unité de décision (132) est configurée pour fournir la décision pour ajuster le flux de données en fonction de l'état de réseau actuel déterminé du réseau de communication (1) ; des exigences, en particulier des exigences de QoS, reçues des applications (200) ; des priorités associées aux applications (200) ; et des paramètres pour les applications couplées (200) pertinents pour ajuster le flux de données.

8. Module de réseau selon la revendication 7,
**caractérisé par**
une unité d'interface supplémentaire (150) pour coupler un registre de service tactique (160) pour sauvegarder les paramètres pertinents pour les applications couplées (200) pour ajuster le flux de données.

9. Module de réseau selon l'une quelconque des revendications 4 à 8,
**caractérisé en ce que**
l'unité de décision (132) est configurée pour utiliser un mécanisme de négociation pour négocier avec au moins l'une des applications couplées (200) les ressources de communication à allouer et/ou les exigences pour les données mises en paquets à fournir par l'application couplée (200).

10. Module de réseau selon l'une quelconque des revendications 1 à 9,
**caractérisé en ce que**
l'unité d'ajustement (130) est configurée pour communiquer l'état de réseau actuel déterminé à au moins l'une des applications (200), en particulier lorsqu'elle est interrogée par l'au moins une application.

11. Module de réseau selon l'une quelconque des revendications 1 à 10,
**caractérisé en ce que**
les modules de communication (400) comprennent un certain nombre de dispositifs radio tactiques.

12. Module de réseau selon l'une quelconque des revendications 1 à 11,
**caractérisé en ce que**
l'unité de détermination (131) est configurée pour déterminer l'état de réseau actuel du réseau de communication (1) en fonction d'informations d'état concernant les M autres systèmes électroniques (10) reçues des M autres systèmes électroniques (10) via le module de routage (300).

13. Module de réseau selon l'une quelconque des revendications 1 à 12,
**caractérisé en ce que**
le système électronique correspondant (10) est mis en oeuvre en tant que système de véhicule, en tant que système de poste de commande, ou en tant que système de soldat.

14. Système électronique (10) d'une personne déployée, comprenant un module de réseau (100) selon l'une quelconque des revendications 1 à 13.

15. Réseau de communication (1) couplant une pluralité N de systèmes électroniques (10), dans lequel chaque système électronique (10) comprend un module de réseau (100) selon l'une quelconque des revendications 1 à 13.
